# DEMANDE DE BREVET EUROPEEN

(11) **EP 2 767 883 A1**
(43) Date de publication de la demande: **20.08.2014**
(21) Numéro de dépôt: 14155774.4
(22) Date de dépôt: 19.02.2014
(51) Int. Cl.: G06F 1/16, F16M 11/06, H04R 1/06

(54) **Station d'accueil pour appareil electronique portable**

(30) Priorité: 19.02.2013 FR 1300364
(71) Demandeur: Bigben Interactive SA, 59818 Lesquin (FR)
(72) Inventeur: Falc, Alain, 8500 Kortrijk (BE); Lemesre, Fabrice, 59270 Bailleul (FR)
(74) Mandataire: Vigand, Philippe

(57) **Abrégé**

Station d'accueil pour recevoir au moins deux appareils électroniques portables comportant chacun un écran d'affichage, la station d'accueil comportant :
- au moins deux interfaces de connexion chacune agencée pour connecter à la station d'accueil et maintenir en place sur la station d'accueil l'un desdits au moins deux appareils électroniques portables,
caractérisé en ce que la station d'accueil comprend un support sur lequel lesdites au moins deux interfaces de connexion sont agencées, le support étant mobile par rapport à la station d'accueil pour orienter vers un utilisateur l'écran d'affichage de l'un desdits au moins deux appareils électroniques portables connecté et maintenu en place par l'une desdites au moins deux interfaces de connexion.

## Description

La présente invention concerne de manière générale une station d'accueil agencée pour recevoir plusieurs appareils électroniques portables.

Il est connu dans l'art antérieur des dispositifs qui permettent de recevoir plusieurs appareils électroniques portables (tels que des téléphones par exemple), pour former une station d'écoute. Un tel appareil comprend des interfaces de connexion pour connecter et maintenir en place les appareils électroniques portables, afin de permettre un échange de données contenues dans ces appareils (telles que de la musique) pour pouvoir former une sortie (sonore dans le cas de la musique) en connectant les appareils électroniques à des périphériques de sortie (comme des enceintes par exemple). En contrepartie, ce système présente notamment l'inconvénient d'être volumineux, pour pouvoir présenter tous les appareils face à l'utilisateur, alors qu'un seul n'est utilisé à la fois pour échanger les données avec la station d'accueil, particulièrement lorsqu'elle forme une station d'écoute. En effet, dans ce cas, un seul appareil envoie des morceaux musicaux aux enceintes de la station d'accueil, et l'autre interface de connexion de l'autre appareil électronique n'est pas utilisée.

Un but de la présente invention est de répondre aux inconvénients des documents de l'art antérieur mentionnés ci-dessus et en particulier, tout d'abord, de proposer une station d'accueil simple permettant de recevoir plusieurs appareils électroniques portables, tout en étant compacte.

Pour cela un premier aspect de l'invention concerne une station d'accueil pour recevoir au moins deux appareils électroniques portables comportant chacun un écran d'affichage, la station d'accueil comportant :
- au moins deux interfaces de connexion chacune agencée pour connecter à la station d'accueil et maintenir en place sur la station d'accueil l'un desdits au moins deux appareils électroniques portables,
   caractérisé en ce que la station d'accueil comprend un support sur lequel lesdites au moins deux interfaces de connexion sont agencées, le support étant mobile par rapport à la station d'accueil pour orienter vers un utilisateur l'écran d'affichage de l'un desdits au moins deux appareils électroniques portables connecté et maintenu en place par l'une desdites au moins deux interfaces de connexion. La station d'accueil selon la présente mise en oeuvre permet d'optimiser l'agencement de la station d'accueil, car le support mobile donne une liberté de conception pour positionner l'appareil connecté vers l'utilisateur. En d'autres termes, le support mobile permet de positionner l'interface de connexion qui sera utilisée de telle sorte que l'appareil électronique qui y est connecté soit orienté vers l'utilisateur, et l'autre des interfaces peut être positionnée sans précaution particulière car dans cette configuration, elle ne sert pas. Cependant, lorsqu'elle sera utilisée, le support mobile sera changé de position pour que l'écran de l'appareil électronique qu'elle connectera soit orienté vers l'utilisateur.

Selon un aspect de l'invention, le support est agencé pour positionner l'autre desdites au moins deux interfaces de connexion derrière l'appareil connecté et maintenu en place sur la station d'accueil, et dont l'écran est orienté vers l'utilisateur. La compacité de la station d'accueil selon cette mise en oeuvre est améliorée, puis que l'interface de connexion qui n'est pas utilisée est agencée derrière l'appareil en cours d'utilisation. Il va sans dire que même si l'interface de connexion n'est pas utilisée pour connecter un appareil électronique portable, elle peut en maintenir un en place. Autrement dit, toutes les interfaces de connexion peuvent simultanément maintenir en place un appareil, mais seul celui dont l'écran est orienté vers l'utilisateur est connecté à la station d'accueil.

Selon un aspect de l'invention, la station d'accueil comprend une façade agencée pour être orientée vers l'utilisateur, et le support est agencé pour donner, à l'écran d'affichage dudit appareil électronique portable connecté et maintenu en place par l'une desdites au moins deux interfaces de connexion, une orientation similaire à celle de la façade. L'ergonomie globale de l'appareil est améliorée puisque la façade avant de l'appareil a la même orientation que l'écran de l'appareil en cours d'utilisation. L'orientation vers la façade est la même que l'orientation vers l'utilisateur.

Selon un aspect de l'invention, la façade comprend un dispositif agencé pour former une sortie à l'appareil électronique portable connecté et maintenu en place par l'une desdites au moins deux interfaces de connexion. La façade selon la présente mise en oeuvre comporte un dispositif de sortie pour l'appareil électronique connecté dont l'écran est orienté vers l'utilisateur. L'utilisation de la station d'accueil est donc aisée et pratique pour l'utilisateur, puisque l'appareil électronique portable utilisé et sa sortie sur la station d'accueil sont orientés vers lui.

Selon un aspect de l'invention, la station d'accueil comprend un circuit de charge agencé pour charger au moins l'un des appareils électroniques connecté par l'une desdites au moins deux interfaces de connexion. Simultanément à la connexion, la station d'accueil peut recharger l'appareil électronique portable.

Selon un aspect de l'invention, la station d'accueil est agencée pour charger uniquement l'appareil électronique dont l'écran est orienté vers l'utilisateur. Cette mise en oeuvre sécurise l'utilisation de la station d'accueil si elle maintien en place deux appareils électroniques simultanément. En effet, des risques de surcharge ou de compatibilité peuvent exister si les appareils ont des caractéristiques électriques différentes, et ces risques sont supprimés en ne chargeant que l'appareil orienté vers l'utilisateur.

Selon un aspect de l'invention, la station d'accueil comprend autant de circuits de charges indépendants que d'interfaces de connexion, reliés à ces dernières. Chaque interface de connexion est reliée à son propre circuit de charge, ce qui garantit une fonction de charge adaptée à chaque appareil électronique.

Selon un aspect de l'invention, le support mobile est agencé pour connecter au circuit de charge uniquement l'interface de connexion connectant et maintenant en place l'appareil électronique portable dont l'écran d'affichage est orienté vers l'utilisateur. Le support selon cette mise en oeuvre fait office d'interrupteur et connecte le circuit de charge seulement à l'interface de connexion qui connecte et maintient l'appareil électronique dont l'écran est orienté vers l'utilisateur.

Selon un aspect de l'invention, le support est mobile en rotation par rapport à la station d'accueil. Cette cinématique de mouvement est simple et intuitive pour l'utilisateur.

Selon un aspect de l'invention, lesdites au moins deux interfaces de connexion sont séparées par une portion du support en saillie, agencée entre elles pour former un appui pour chacun des appareils électroniques connectés et maintenus en place. La même portion en saillie forme la séparation entre les interfaces de connexion et l'appui des appareils électroniques.

Selon un aspect de l'invention, la station d'accueil comprend au moins une enceinte pour former une station d'écoute.

Selon un aspect de l'invention, ladite au moins une enceinte est agencée sur la façade.

Selon un aspect de l'invention, la station d'accueil comprend au moins un écran d'affichage.

Avantageusement, le support est agencé sur une face supérieure et décalé vers l'arrière de l'appareil. Dans le cas où la station d'accueil est une tour avec des enceintes sur la façade, alors cette mise en oeuvre permet de positionner le centre de gravité au milieu des appuis de la station d'accueil sur le sol.

Avantageusement, la station d'accueil présente un centre de gravité, et elle comprend un contrepoids agencé pour positionner le centre de gravité à moins de quarante centimètres d'un sol supportant la station d'accueil.

Avantageusement, le contrepoids forme un socle à la station d'accueil et est décalé vers l'arrière. Dans le cas où la station d'accueil est une tour avec des enceintes sur la façade, alors cette mise en oeuvre permet de compenser le poids des aimants des enceintes et positionner le centre de gravité au milieu des appuis de la station d'accueil sur le sol.

Avantageusement, le contre poids pèse entre 1 et 2 kilogramme, et idéalement entre 1.4 et 1.6 kilogrammes. Cela compense le poids de quatre à six enceintes qui pèsent chacune typiquement entre 200 et 300 grammes.

Avantageusement, la station d'accueil comprend une source lumineuse agencée pour éclairer dans une direction opposée à la façade. Cette source lumineuse peut être une LED et émettre une lumière indirecte ou lumière d'ambiance.

Selon un aspect de l'invention, la station d'accueil comprend un récepteur d'ondes radio.

Selon un aspect de l'invention, les interfaces de connexion sont différentes. La même station d'accueil peut fonctionner avec plusieurs appareils électroniques portables différents.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue générale d'une station d'accueil selon l'invention ;
- la figure 2 représente un détail de la station d'accueil de la figure 1.

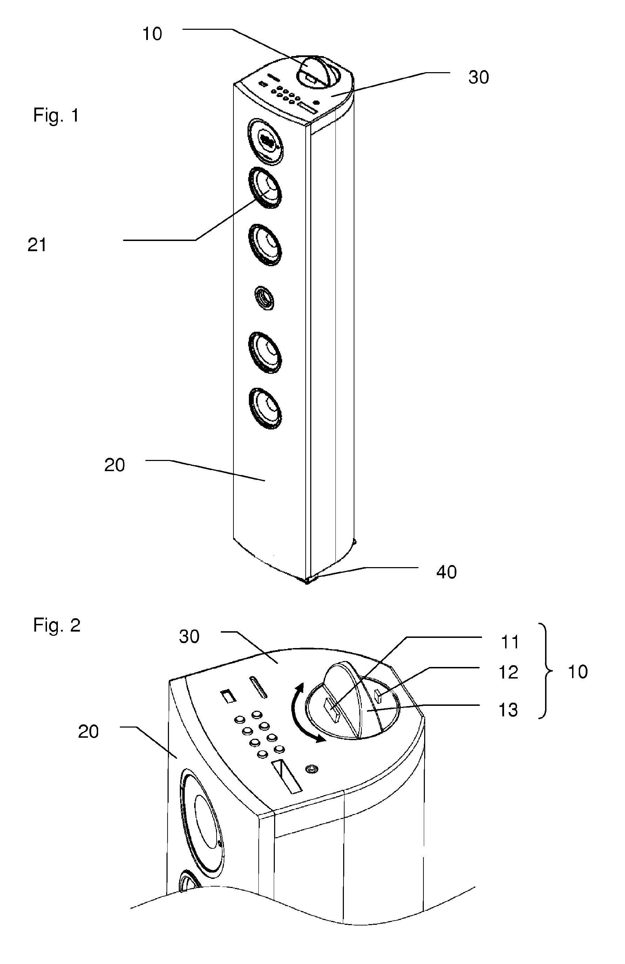

La figure 1 représente une station d'accueil pour écouter des morceaux de musique stockés sur des appareils électroniques portables. La station d'accueil comprend un support 10 sur lequel sont agencées les interfaces de connexion pour les appareils électroniques portables. Le support 10 sera décrit dans le détail à la figure 2, et il est agencé sur une face supérieure 30 de la station d'accueil, à côtés de boutons de commande de la station d'accueil. La station d'accueil comporte plusieurs enceintes 21 agencées sur une façade 20 de la station d'accueil. La façade 20 est agencée pour être orientée vers un utilisateur, afin que le son émis par les enceintes soit directement diffusé vers l'utilisateur. Des pieds 40 sont prévus sous la station d'accueil pour lui offrir un appui stable sur le sol.

La figure 2 représente en détail le support 10 de la station d'accueil. Comme indiqué par la double flèche, le support 10 est pivotant par rapport à la station d'accueil. De plus, le support 10 comprend deux interfaces de connexion 11 et 12, séparées par une portion en saillie 13. Chaque interface de connexion 11 et 12 est spécifique à un type particulier d'appareil électronique portable, pour en permettre la connexion avec la station d'accueil. Ainsi, la station d'accueil est compatible avec plusieurs types d'appareils électroniques portables, sans avoir à la compléter avec des câbles d'interface.

Comme évoqué ci-dessus, le support 10 est pivotant, ce qui permet de positionner vers la face avant l'interface de connexion compatible avec l'appareil électronique portable qui sera utilisé pour diffuser de la musique. En d'autres termes, l'utilisateur, en fonction du type de son appareil électronique portable, va tourner le support 10 pour que l'écran de son appareil électronique portable soit orienté vers lui lorsqu'il sera face à la façade 20, lors de l'utilisation. Ainsi, il pourra visualiser facilement l'écran de son appareil électronique portable.

L'agencement du support 10, avec la portion saillante 13 entre les deux interfaces de connexion 11 et 12 permet d'améliorer la compacité de la station d'écoute. En effet, l'interface de connexion non utilisée (ici l'interface de connexion 12) est agencée vers l'arrière de l'appareil, sans aucun préjudice pour l'ergonomie, puisqu'elle n'est pas utilisée. Elle peut toutefois maintenir en place un appareil électronique portable, mais celui-ci n'étant pas utilisé pour diffuser de la musique, ce n'est pas gênant si son écran d'affichage est orienté vers l'arrière.

Un autre aspect, non représenté, concerne la charge de l'appareil électronique portable. En effet, les appareils électroniques portables sont équipés d'une batterie rechargeable, et la station d'accueil selon la présente invention comprend un circuit de charge agencé pour charger les batteries de ces appareils. Cependant, comme vu ci-dessus, la station d'accueil peut maintenir en place plusieurs appareils simultanément, même s'ils ne sont pas utilisés simultanément. Dans ce cas, il est important de ne pas connecter les deux appareils au même circuit de charge, pour éviter tout risque de surcharge de l'un des appareils électroniques. Une première mise en oeuvre peut consister en ce que le support 10 forme un interrupteur qui ne met en connexion avec le circuit de charge que l'interface de connexion qui maintient en place l'appareil électronique utilisé (celui dont l'écran est orienté vers l'utilisateur). Aussitôt que le support 10 est pivoté, cette interface de connexion est déconnectée du circuit de charge. On peut envisager également de prévoir un circuit de charge par interface de connexion, de sorte que chaque interface de connexion dispose de son propre circuit de charge.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un support qui comprend deux interfaces de connexion différentes, mais on peut envisager d'implanter plus d'interfaces de connexion, sans pour autant qu'elles soient toutes différentes les unes des autres.

## Revendications

1. Station d'accueil pour recevoir au moins deux appareils électroniques portables comportant chacun un écran d'affichage, la station d'accueil comportant :
- au moins deux interfaces de connexion (11, 12) chacune agencée pour connecter à la station d'accueil et maintenir en place sur la station d'accueil l'un desdits au moins deux appareils électroniques portables,
la station d'accueil comprenant :
- une façade (20) agencée pour être orientée vers un utilisateur,
- un support (10) sur lequel lesdites au moins deux interfaces de connexion (11, 12) sont agencées, le support (10) étant mobile par rapport à la station d'accueil pour orienter vers la façade (20) l'écran d'affichage de l'un desdits au moins deux appareils électroniques portables connecté et maintenu en place par l'une desdites au moins deux interfaces de connexion (11, 12),
- un circuit de charge agencé pour charger au moins l'un des appareils électroniques connecté par l'une desdites au moins deux interfaces de connexion (11, 12),
**caractérisée en ce qu'**elle est agencée pour charger uniquement l'appareil électronique dont l'écran est orienté vers la façade (20).

2. Station d'accueil selon la revendication précédente, **caractérisé en ce que** le support (10) est agencé pour positionner l'autre desdites au moins deux interfaces de connexion (11, 12) derrière l'appareil connecté et maintenu en place sur la station d'accueil, et dont l'écran est orienté vers la façade (20).

3. Station d'accueil selon la revendication précédente, **caractérisée en ce que** la façade (20) comprend un dispositif agencé pour former une sortie à l'appareil électronique portable connecté et maintenu en place par l'une desdites au moins deux interfaces de connexion (11, 12).

4. Station d'accueil selon l'une des revendications précédentes, **caractérisée en ce que** le support (10) mobile est agencé pour connecter au circuit de charge uniquement l'interface de connexion connectant et maintenant en place l'appareil électronique portable dont l'écran d'affichage est orienté vers la façade (20).

5. Station d'accueil selon l'une des revendications précédentes, **caractérisée en ce que** le support (10) est mobile en rotation par rapport à la station d'accueil.

6. Station d'accueil selon l'une des revendications précédentes, **caractérisée en ce que** lesdites au moins deux interfaces de connexion (11, 12) sont séparées par une portion (13) du support (10) en saillie, agencée entre elles pour former un appui pour chacun des appareils électroniques connectés et maintenus en place.

7. Station d'accueil selon l'une des revendications précédentes, **caractérisé en ce qu'**elle comprend au moins une enceinte (21) pour former une station d'écoute.

8. Station d'accueil selon la revendication précédente, **caractérisée en ce que** ladite au moins une enceinte (21) est agencée sur la façade (20).

9. Station d'accueil selon la revendication précédente, **caractérisée en ce que** le support est agencé sur une face supérieure et décalé vers l'arrière de l'appareil.

10. Station d'accueil selon l'une des revendications précédentes et présentant un centre de gravité, **caractérisée en ce qu'**elle comprend un contrepoids agencé pour positionner le centre de gravité à moins de quarante centimètres d'un sol supportant la station d'accueil.

11. Station d'accueil selon la revendication précédente, **caractérisée en ce que** le contrepoids forme un socle à la station d'accueil et est décalé vers l'arrière.

12. Station d'accueil selon l'une des revendications précédentes, **caractérisée en ce qu'**elle comprend une source lumineuse agencée pour éclairer dans une direction opposée à la façade (20).

13. Station d'accueil selon l'une des revendications précédentes, **caractérisée en ce qu'**elle comprend au moins un écran d'affichage.

14. Station d'accueil selon l'une des revendications précédentes, **caractérisée en ce qu'**elle comprend un récepteur d'ondes radio.

15. Station d'accueil selon l'une des revendications précédentes, **caractérisée en ce que** les interfaces de connexion (11, 12) sont différentes.
